# EUROPEAN PATENT SPECIFICATION

(11) **EP 1 191 266 B1**
(45) Date of publication and mention of the grant of the patent: **11.04.2007**
(21) Application number: 01308145.0
(22) Date of filing: 25.09.2001
(51) Int. Cl.: F16L 21/03, F16L 25/00, F16L 47/06

(54) **An adaptor and a seal**
Adaptereinheit und Dichtung
Adaptateur et joint d'étanchéité

(30) Priority: 25.09.2000 GB 0023466
(43) Date of publication of application: 27.03.2002
(73) Proprietor: Polypipe Building Products Ltd., Edlington, Doncaster DN12 1ES (GB)
(72) Inventor: Millward, Keith, Campsall, Doncaster DN6 9AF (GB)
(74) Representative: Johnson, Terence Leslie

(56) References cited:
- DE-C- 3 906 752
- US-A- 5 326 138
- US-A- 5 582 435
- US-A1- 2001 008 342

## Description

The invention relates to an adaptor for adapting a socket having a recess for a seal so that it can be used with a corrugated member, and a method of adapting a socket having a recess for a seal so that it can be used with a corrugated member.

More particularly, the invention relates to an adaptor for adapting a pipe socket having a recess for a seal so that it can be used with a corrugated pipe, and a method of adapting a pipe socket having a recess for a seal so that it can be used with a corrugated pipe.

Pipe sockets are used for joining a pipe to another pipe or some other member. A seal is usually used to prevent leakage at the joint. It is known for pipe sockets to be provided with a recess to allow such a seal to be mounted inside the pipe socket. Seals for insertion in a recess in a pipe socket usually comprise a ring for mounting the seal in the recess of the pipe socket and an annular flange which projects radially inwardly from the ring and which, in use, sealingly engages with a pipe that has been inserted in the pipe socket.

A problem with such seals is that they are not suitable for use with corrugated pipes as the annular flange on the seal tends to snag on the corrugations of the pipe on insertion of the pipe into the pipe socket, which makes jointing difficult and may even pull the seal out of the recess.

US 5582435 relates to a retainer fitting for the end of a pipe which provides the pipe with an internal screw thread.

US 5326136 relates to a coupler for joining together two corrugated pipes.

US 4174859 discloses a conduit coupling assembly for joining a flat-surfaced pipe to another pipe or conduit. This document is considered the closest prior art document.

It is an object of the invention to seek to provide an adapting system which can obviate these disadvantages.

According to a first aspect of the invention there is provided an adapting system for adapting a socket having a recess for a seal so that the socket can be used with a corrugated member, the system comprising:
(i) the socket; and
(ii) an adaptor, the adaptor being mountable on the socket and having an element;
characterised in that when the adaptor is mounted on the socket, the element completely covers the recess to prevent the corrugated member from snagging the recess on insertion of the corrugated member into the socket.

When the adaptor is mounted on the socket, the element may be inclined towards the inside of the socket so as to aid insertion of the member into the socket.

The element may be frusto-conical.

The adaptor may be mountable on the socket by mounting means comprising a recess for receiving the member-receiving end of the socket.

The adaptor may be retained on the socket by any of a snap-fit means, welding means, interference fit means or adhesive means, or any combination thereof. All of those techniques are relatively effective.

The adaptor may be usable with a pipe socket.

The adaptor may be usable with a standard BS/EN drain or sewer pipe socket.

The adaptor may be for adapting a socket so that it can be used with a corrugated pipe.

According to a second aspect of the present invention there is provided a method of adapting a socket having a recess for a seal so that the socket can be used with a corrugated member, the method comprising mounting a seal on the corrugated member and mounting an adaptor on the socket, the adaptor having an element which when the adaptor is mounted on the socket completely covers the recess so as to prevent the corrugated member from snagging on the recess on insertion of the member into the socket.

Fig. 1 shows a sectional view of a pipe socket having a recess for a seal, and a straight-sided pipe for insertion in the pipe socket, the pipe socket having a snap-cap to retain a seal in the recess mounted thereon, all of the above forming part of the prior art; and

Fig. 2 shows a sectional view of the pipe socket of Fig. 1 and a corrugated pipe for insertion in the pipe socket, the pipe socket having an adaptor according to the invention mounted thereon, and the corrugated pipe having a seal according to the invention mounted thereon.

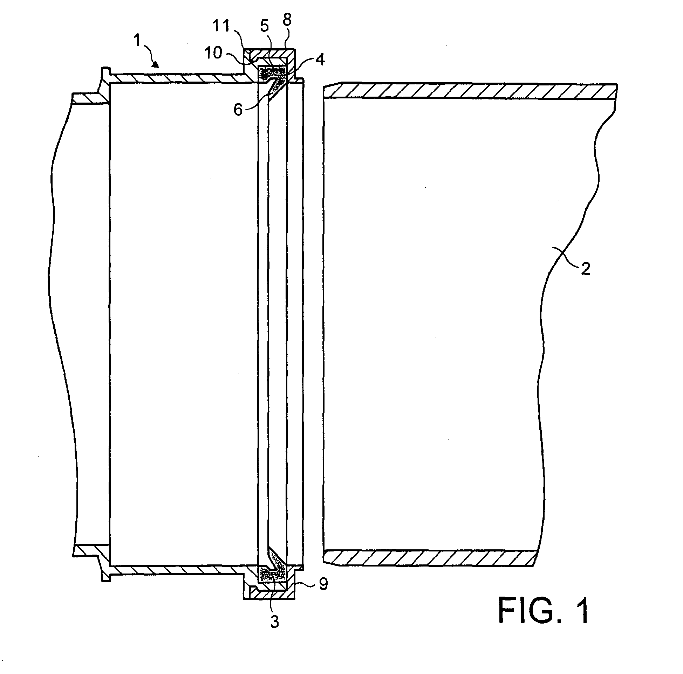

Fig. 1 shows a standard BS/EN drain or sewer pipe socket 1 for receiving a standard BS/EN drain or sewer pipe 2 having a solid wall or foam core construction. The pipe socket 1 has at its pipe-receiving end an annular recess 3 for receiving an annular rubber socket seal 4. The seal 4 comprises a ring 5 of square cross-section and an annular sealing flange 6 which projects radially inwardly from the ring 5 and is inclined towards the inside of the pipe socket 1. The recess 3 is of square cross-section to accommodate the ring 5. The seal 4 is retained in the recess 3 by a standard annular snap-cap 7. The snap-cap 7 comprises a ring 8 which enables the snap-cap 7 to be mounted on the pipe-receiving end of pipe socket 1, and an annular flange 9 which projects radially inwardly from the ring 8 going over the seal 4 so as to retain it in the recess 3. The snap-cap 7 and the pipe socket 1 include complementary snap-fit means 10,11 which retain the snap-cap 7 on the pipe socket 1.

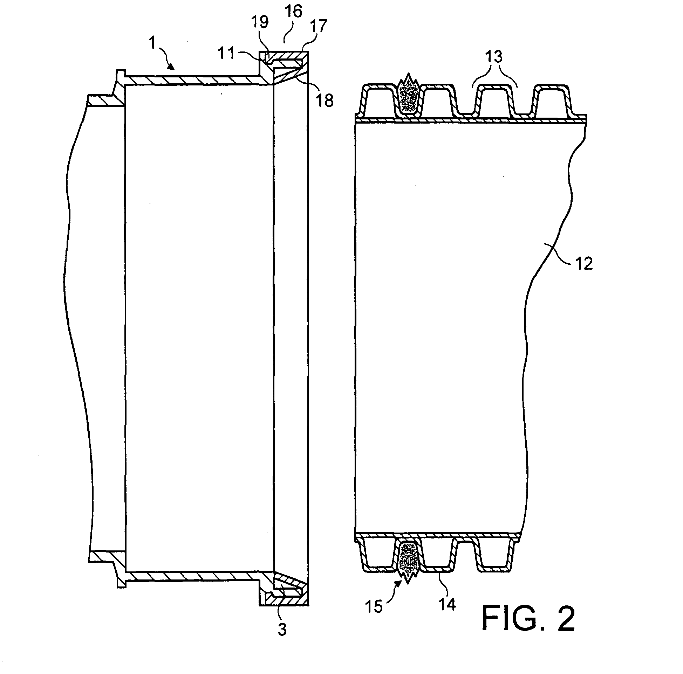

Fig. 2 shows the standard BS/EN drain or sewer pipe socket 1 of Fig. 1 which has been adapted according to the invention so that it can be used with a corrugated pipe 12. The pipe illustrated is a double-walled corrugated pipe but it could also be a single-walled corrugated pipe.

As can be seen from the drawings, if the corrugated pipe 12 is inserted into the pipe socket 1 of Fig. 1, the annular sealing flange 6 of the seal 4 would snag on the gaps 13 between the corrugations 14. This problem is solved in the embodiment by mounting an annular rubber seal 15 on the pipe 12 in one of the gaps 13 between the corrugations 14 of the corrugated pipe 12, and mounting an adaptor 16 on the pipe-receiving end of pipe socket 1 to provide an effective lead-in for the seal 15.

Stated in another way, the adaptor prevents the seal from snagging in or on the recess 3 of the socket, which could make jointing difficult (owing to high jointing forces) or in some cases the seal could be pulled out of the corrugations if it snagged sufficiently in the recess 3.

The adaptor 16 comprises a ring 17 which enables the adaptor 16 to be mounted on the pipe-receiving end of pipe socket 1 and a frusto-conical flange 18 which projects radially inwardly from the ring 17 going over the edge of the pipe socket 1 and then inclining towards the inside of pipe socket 1 so as to cover the empty recess 3, and thus prevents a seal mounted between the corrugations 14 of the corrugated pipe 12 from snagging on the empty recess 3 on insertion of the corrugated pipe 12 into the pipe socket 1. The inclination of the flange 18 aids insertion of the seal 4 into the pipe socket 1 by deflecting the seal towards the outer surface of the pipe during insertion.

The adaptor 16 and the pipe socket 1 include complementary snap-fit means 19 to which retain the adaptor 16 on the pipe socket 1. Although the adaptor has been illustrated as having snap-fit means to retain it on the pipe socket, any suitable means could be used, for example, welding means, interference means and/or adhesive means.

## Claims

1. An adapting system for adapting a socket (1) having a recess (3) for a seal (4) so that the socket (1) can be used with a corrugated member (12), the oder system comprising:
(i) the socket (1); and
(ii) an adaptor (16), the adaptor (16) being mountable on the socket (1) and having an element (18);
**characterised in that** when the adaptor (16) is mounted on the socket (1), the element (18) completely covers the recess (3) to prevent the corrugated member (12) from snagging the recess (3) on insertion of the corrugated member (12) into the socket (1).

2. An adapting system according to claim 1, wherein, when the adaptor (16) is mounted on the socket (1), the element (18) is inclined towards the inside of the socket (1) so as to aid insertion of the corrugated member (12) into the socket (1).

3. An adapting system according to claim 2, wherein the element (18) is frusto-conical.

4. An adapting system according to any previous claim, wherein the adaptor (16) is mountable on the socket (1) by mounting means comprising a recess for receiving the member-receiving end of the socket (1).

5. An adapting system according to any previous claim, wherein the adaptor (16) is retained on the socket (1) by one or more of the group consisting of snap-fit means (19), welding means, interference fit means and adhesive means.

6. An adapting system according to any previous claim, wherein the adaptor (16) is usable with a pipe socket.

7. An adapting system according to claim 6, the adaptor (16) being usable with a standard BS/EN drain or sewer pipe socket.

8. An adapting system according to any previous claim, wherein the adaptor (16) is for adapting a socket (1) so that it can be used with a corrugated pipe (12).

9. An adapting system according to any previous claim wherein the adaptor (16) is mounted on a pipe socket (1).

10. An adapting system according to any previous claim, wherein the corrugated member (12) having a seal (15) mounted upon it.

11. A method of adapting a socket (1) having a recess (3) for a seal (4) so that the socket (1) can be used with a corrugated member (12), the method comprising mounting a seal (15) on the corrugated member (12) and mounting an adaptor (16) on the socket (1), the adaptor (16) having an element (18) which when the adaptor (16) is mounted on the socket (1) completely covers the recess (3) so as to prevent the corrugated member (12) from snagging on the recess (3) on insertion of the member (12) into the socket (1).

12. A method according to claim 11, performed using an adapting system as claimed in any one of claims 1 to 10.

## Patentansprüche

1. Adaptersystem zum Anpassen eines Stutzens (1), der eine Aussparung (3) für eine Dichtung (4) hat, so dass der Stutzen (1) mit einem gewellten Element (12) verwendet werden kann, wobei das System Folgendes umfasst:
(i) den Stutzen (1) und
(ii) einen Adapter (16), wobei der Adapter (16) an dem Stutzen (1) angebracht werden kann und ein Element (18) hat,
**dadurch gekennzeichnet, dass** das Element (18), wenn der Adapter (16) an dem Stutzen (1) angebracht ist, die Aussparung (3) vollständig abdeckt, um so zu verhindern, dass sich das gewellte Element (12) beim Einsetzen des Elements (12) in den Stutzen (1) an der Aussparung (3) verhakt.

2. Adaptersystem nach Anspruch 1, wobei das Element (18), wenn der Adapter (16) an dem Stutzen (1) angebracht ist, zur Innenseite des Stutzens (1) hin geneigt ist, um so das Einsetzen des gewellten Elements (12) in den Stutzen (1) zu unterstützen.

3. Adaptersystem nach Anspruch 2, wobei das Element (18) kegelstumpfförmig ist.

4. Adaptersystem nach einem der vorhergehenden Ansprüche, wobei der Adapter (16) durch Anbringungsmittel, die eine Aussparung zum Aufnehmen des Elementaufnahme-Endes des Stutzens (1) umfassen, an dem Stutzen (1) angebracht werden kann.

5. Adaptersystem nach einem der vorhergehenden Ansprüche, wobei der Adapter (16) durch eines oder mehrere aus der Gruppe, die aus Schnapp-Passungsmitteln (19), Schweißmitteln, Presspassungsmitteln und Klebemitteln besteht, an dem Stutzen (1) festgehalten wird.

6. Adaptersystem nach einem der vorhergehenden Ansprüche, wobei der Adapter (16) mit einem Rohrstutzen verwendet werden kann.

7. Adaptersystem nach Anspruch 6, wobei der Adapter (16) mit einem Wasserabfluss- oder Abwasserrohrstutzen nach BS/EN-Standard verwendet werden kann.

8. Adaptersystem nach einem der vorhergehenden Ansprüche, wobei der Adapter (16) dafür dient, einen Stutzen (1) so anzupassen, dass er mit einem Wellrohr (12) verwendet werden kann.

9. Adaptersystem nach einem der vorhergehenden Ansprüche, wobei der Adapter (16) an einem Rohrstutzen (1) angebracht ist.

10. Adaptersystem nach einem der vorhergehenden Ansprüche, wobei das gewellte Element (12) eine daran angebrachte Dichtung (15) hat.

11. Verfahren zum Anpassen eines Stutzens (1), der eine Aussparung (3) für eine Dichtung (4) hat, so dass der Stutzen (1) mit einem gewellten Element (12) verwendet werden kann, wobei das Verfahren umfasst, eine Dichtung (15) an dem gewellten Element (12) anzubringen und einen Adapter (16) an dem Stutzen (1) anzubringen, wobei der Adapter (16) ein Element (18) hat, das, wenn der Adapter (16) an dem Stutzen (1) angebracht ist, die Aussparung (3) vollständig abdeckt, um so zu verhindern, dass sich das gewellte Element (12) beim Einsetzen des Elements (12) in den Stutzen (1) an der Aussparung (3) verhakt.

12. Verfahren nach Anspruch 11, durchgeführt unter Verwendung eines Adaptersystems nach einem der Ansprüche 1 bis 10.

## Revendications

1. Système d'adaptation pour adapter un manchon (1) comportant un évidement (3) pour un joint (4), de sorte à permettre l'utilisation du manchon (1) avec un élément ondulé (12), le système comprenant:
(i) le manchon (1); et
(ii) un adaptateur (16), l'adaptateur (16) pouvant être monté sur le manchon (1) et comportant un élément (18);
**caractérisé en ce que** lors du montage de l'adaptateur (16) sur le manchon (1), l'élément (18) recouvre complètement l'évidement (3) pour empêcher un accrochage de l'élément ondulé (12) sur l'évidement (3) lors de l'insertion de l'élément ondulé (12) dans le manchon (1).

2. Système d'adaptation selon la revendication 1, dans lequel, lors du montage de l'adaptateur (16) sur le manchon (1), l'élément (18) est incliné vers l'intérieur du manchon (1), de sorte à faciliter l'insertion de l'élément ondulé (12) dans le manchon (1).

3. Système d'adaptation selon la revendication 2, dans lequel l'élément (18) a une forme en tronc de cône.

4. Système d'adaptation selon l'une quelconque des revendications précédentes, dans lequel l'adaptateur (16) peut être monté sur le manchon (1) par un moyen de montage comprenant un évidement pour recevoir l'extrémité de réception de l'élément du manchon (1).

5. Système d'adaptation selon l'une quelconque des revendications précédentes, dans lequel l'adaptateur (16), est retenu sur le manchon (1) par un ou plusieurs moyens du groupe constitué de moyens d'encliquetage (19), de moyens de soudage, de moyens à ajustement serré et de moyens adhésifs.

6. Système d'adaptation selon l'une quelconque des revendications précédentes, dans lequel l'adaptateur (16) peut être utilisé avec un manchon de tuyau.

7. Système d'adaptation selon la revendication 6, l'adaptateur (16) pouvant être utilisé avec un manchon de tuyau d'évacuation ou d'égout BS/EN standard.

8. Système d'adaptation selon l'une quelconque des revendications précédentes, dans lequel l'adaptateur (16) sert à adapter un manchon (1) de sorte à permettre son utilisation avec un tuyau ondulé (12).

9. Système d'adaptation selon l'une quelconque des revendications précédentes, dans lequel l'adaptateur (16) est monté sur un manchon de tuyau (1).

10. Système d'adaptation selon l'une quelconque des revendications précédentes, dans lequel l'élément ondulé (12) comporte un joint (15) qui y est monté.

11. Procédé d'adaptation d'un manchon (1) comportant un évidement (3) pour un joint (4), de sorte à permettre l'utilisation du manchon (1) avec un élément ondulé (12), le procédé comprenant les étapes de montage d'un joint (15) sur l'élément ondulé (12) et de montage d'un adaptateur (16) sur le manchon (1), l'adaptateur (16) comportant un élément (18), qui, lors du montage de l'adaptateur (16) sur le manchon (1), recouvre complètement l'évidement (3), de sorte à empêcher un accrochage de l'élément ondulé (12) sur l'évidement (3) lors de l'insertion de l'élément (12) dans le manchon (1).

12. Procédé selon la revendication 11, exécuté par l'intermédiaire d'un système d'adaptation selon l'une quelconque des revendications 1 à 10.
